# EUROPEAN PATENT APPLICATION

(11) **EP 3 168 133 A1**
(43) Date of publication of application: **17.05.2017**
(21) Application number: 15818445.7
(22) Date of filing: 08.07.2015
(51) Int. Cl.: B63B 43/18, B63B 3/14

(54) **ELASTIC STRUCTURE ANTI-IMPACT FRAME BODY**

(30) Priority: 10.07.2014 CN 201410327284; 11.03.2015 CN 201510105795
(71) Applicant: Jiang, Liping, Xiamen, Fujian 361008 (CN)
(72) Inventor: Jiang, Liping, Xiamen, Fujian 361008 (CN)
(74) Representative: De Pablos Riba, Juan Ramon
(86) International application number: PCT/CN2015/083529
(87) International publication number: WO 2016/004866

(57) **Abstract**

An elastic structure anti-impact frame body for use in ships, automobiles, aircraft, trains, railcars and other moving vehicles, said frame body being a wholly or partially elastic frame, the bearing components constituting the frame body forming an arc-shape or a wave-shaped curve, and the frame body being made of an elastic material. The whole or part of the structure of the elastic structure anti-impact frame body has an elastic deformation function; on the premise that the elastic structure does not affect normal driving or bearing capacity, under the force of an impact on said frame, the frame body will elastically deform within a corresponding safe range, and can cushion and absorb the energy of the impact; the frame body, when releasing the energy of the impact, returns to the original shape, greatly improving the anti-impact security factor.

## Description

### Technical Field

The present invention relates to security protection field of structure of moving carriers, and more specifically, to an elastic structure anti-impact frame body applied to moving carriers comprising ships, automobiles, aircrafts, railway trains, and railway cars and other vehicles.

### Background of the Present Invention

With increasingly development of economy, science and technology, moving carriers comprising ships, automobiles, aircrafts, trains, and railway cars have been changing, and numbers, running speed and utilization rate are all greatly increased. Various moving carriers bring convenience for people's life and production as a vehicle, however, various collision accidents occur frequently, which always causes great loss, such as train crash and helicopter collision, and car crash occurs more frequently. Therefore, it is of great significance for society, people's livelihood and economy to improve anti-corrosion ability of vehicles, increase safe performance efficiently and decrease accident occurrence.

### Summary of the Present Invention

Based on the idea of conquering the unyielding with the yielding, the present invention provides an elastic structure anti-impact frame body with a reasonable structure, which is applied to moving carriers, comprising ships, automobiles, aircrafts, railway trains and railway cars etc. The present invention enables a rigid collision of moving carriers to be an elastic collision without affecting normal operation of moving carriers, in this way, an impact energy is cushioned and absorbed, and the frame body returns to the original shape when releasing the impact energy, thereby greatly improving the anti-impact security factor and protecting security of personnel in the moving carriers.

The present invention adopts following technical scheme:
An elastic structure anti-impact frame body, comprising a frame body and other components, characterized in that the frame body is a wholly or partially elastic frame, a bearing component constituting the frame body is in the form of an arc or a wavy curve, and the frame body is made of an elastic material. The elastic structure anti-impact frame body of the present invention is applied to moving carriers, comprising ships, automobiles, aircrafts, railway trains, and railway cars.

As an improvement of above-mentioned scheme, the elastic material is made from one or more of the following material: spring steel, elastic stainless steel, titanium alloy, alloy steel foamed metal, honeycomb metal, carbon fiber, aramid fiber, basalt fiber, PBO fiber, quartz fiber, Kevlar fiber, caprone fiber, ultra high molecular weight polyethylene fiber, graphite fiber, silicon carbide fiber, boron fiber, modified nature rubber, butyl rubber, nitrile rubber buna (NBR), chloroprene rubber, silicone rubber, polyurethane (PU), polycarbonate (PC), polyamide (PA), polyacetal (Polyoxy Methylene, POM), modified polyphenyl ether (denatured PPE), polyester (PETP, PBTP), polyphenylene sulfide (PPS), polyaryl ether, unsaturated polyester, phenol plastic, epoxy plastic, fluoride plastic, silicon melt compound, polyamideimide (PAI), polyimide, polybismaleimide, polysulfone (PSF), polyether sulfones (PES), propylene plastic, modified melamine plastic, poly(ether-ether-ketone) (PEEK), Polyetherimide (PEI) and liquid crystal plastic.

In the above-mentioned scheme, the bearing components are arc-shapes or curvy wave-shapes, as an improvement of above-mentioned scheme, the bearing components can also be in the form of a flat and straight shape, and an end of the bearing component is fixedly connected to an adjacent component structure by an elastic member; or an upper and lower surfaces of the bearing component comprises a plurality of grooves and protrusions dislocating and reversely protruding with each other.

As an improvement of above-mentioned scheme, when the frame body is applied to ships, the bearing component comprise a main keel, a false keel and a frame of ships, besides, a reinforcing rib, a reinforcing plate and other reinforcing components have elastic bearing strength as a part of the bearing component.

When the frame body is applied to automobiles, the bearing component comprise a front anti-collision beam, a back anti-collision beam, a left longitudinal beam, a longitudinal beam, a crossbeam and a reinforcing rib of automobiles. The automobiles comprise cars, buses and other covered automobiles.

As an improvement of above-mentioned scheme, when the frame body is applied to aircrafts (including airplanes, airships and helicopters etc.), the bearing component comprises a main beam, a secondary beam, a main frame and a side frame of aircrafts.

As an improvement of above-mentioned scheme, when the frame body is applied to railway trains (including trains, high-speed rail trains, subway trains and other various special railway cars), the bearing component comprises a boundary beam, a crossbeam, a ring beam etc of trains.

Moving carriers are seen as being made up of the frame body and other components, to ensure the elastic performance of the frame body, other components associated with the frame body can be properly improved as needed.

The elastic structure anti-impact frame body of the present invention is mainly applied to moving carriers, comprising ships, automobiles, aircrafts, railway trains, railway cars and other vehicles. The frame body of moving carriers is a wholly elastic frame body or a partially elastic frame, and is made of an elastic material, which greatly increases multi-direction elastic deformation within allowable range when the frame body is under external force, and also considers the bearing capacity of moving carriers such as ships, automobiles and motor cars. The bearing component constituting the frame body is designed for increasing elastic deformation function of the frame body no matter the bearing component is in the form of an arc or a wavy curve or the elastic member is added on ends of the straight-shape components, or an upper and lower surfaces of the bearing component comprises a plurality of grooves and protrusions dislocating and reversely protruding with each other. When the moving carriers have a collision, the frame body has elastic deformation, so that rigid collision is changed to be elastic collision, most of the impact energies are cushioned and absorbed, the impact energy delivered to other components connected with the frame body is greatly weakened, and the whole moving carriers will not be crashed and damaged, thereby protecting security of personnel and other facilities in the moving carriers.

### Brief Description of the Drawings

Fig.1 is a longitudinal section view for a frame body applied to ships of the elastic structure anti-impact frame body according to embodiment 1 of the present invention.
Fig.2 is a top view for a hull and a skeleton applied to ships of the elastic structure anti-impact frame body according to embodiment 1 of the present invention.
Fig.3 is a locally enlarged view of section A in Fig.2.
Fig.4 is a transverse section view for a frame body applied to ships of the elastic structure anti-impact frame body according to embodiment 1 of the present invention.
Fig.5 is a top view for a hull and a skeleton applied to ships of the elastic structure anti-impact frame body according to embodiment 2 of the present invention.
Fig.6 is a longitudinal section view for a skeleton applied to ships of the elastic structure anti-impact frame body according to embodiment 3 of the present invention.
Fig.7 is a top view for a hull and a skeleton applied to ships of the elastic structure anti-impact frame body according to embodiment 3 of the present invention.
Fig.8 is an enlarged view of section B in Fig.7.
Fig.9 is a transverse section view for a frame body applied to ships of the elastic structure anti-impact frame body according to embodiment 4 of the present invention.
Fig. 10 is a transverse section view for a hull applied to ships of the elastic structure anti-impact frame body according to embodiment 5 of the present invention.
Fig. 11 is a schematic diagram for a frame body applied to automobiles of the elastic structure anti-impact frame body according to embodiment 6 of the present invention.
Fig.12 is a schematic diagram for a frame body applied to automobiles of the elastic structure anti-impact frame body according to embodiment 7 of the present invention.
Fig. 13 is a schematic diagram for a frame body applied to helicopters of the elastic structure anti-impact frame body according to embodiment 8 of the present invention.
Fig.14 is a top view for a frame body applied to motor cars of the elastic structure anti-impact frame body according to embodiment 9 of the present invention.
Fig. 15 is an axial view for a frame body applied to motor cars of the elastic structure anti-impact frame body according to embodiment 9 of the present invention.

In the drawings: 1: hull; 2: skeleton; 21: main keel; 22: frame; 23: false keel; 3: deck; 31: lower deck; 32: upper deck; 4: elastic damping slipping structure; 5: elastic protective layer structure; 51: arc-shaped shell; 52: internal skeleton; 6: elastic member; 7: car body; 8: car frame structure; 81: front anti-collision beam; 82: back anti-collision beam; 83: left longitudinal beam; 84: right longitudinal beam; 85: crossbeam; 86: reinforcing rib; 9: structural frame of helicopter; 91: helicopter heading; 92: bulkhead; 93: crossbeam; 94: connecting plate; 95: longitudinal beam; 96; frame; 101: boundary beam; 102: crossbeam; 103: ring beam.

### Detailed Description of Preferred Embodiments

The present invention is further explained in conjunction with following embodiments and drawings for better understanding and clarity of the purpose, technical scheme and advantages of the present invention.

### Embodiment 1:

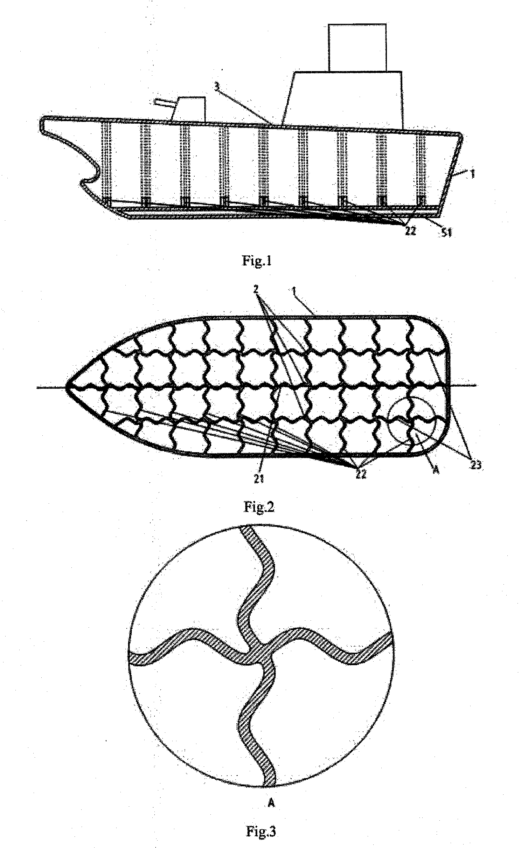

As shown in Fig.1∼4, this embodiment discloses an application of an elastic structure anti-impact frame body in ships, that is, an elastic structure anti-impact frame body for ships. The ship body is made up of a hull 1, a skeleton 2, a deck 3 and other components, and the frame body of the present invention is the skeleton 2 in the present embodiment.

The skeleton 2 comprises an intertwined and fixed main keel 21, a frame 22, a false keel 23, a reinforcing rib, a reinforcing plate (not shown in the figure) and other reinforcing components. Each main keel 21, frame 22 and false keel 23 constituting the skeleton 2 are all plate-type structures, and are fixedly connected to the internal surface of the hull 1. The main keel 21 is placed on the axis of sailing direction of the ship body, the false keel 23 and the main keel 21 are parallel and symmetrically placed both sides of the main keel 21, and the frame 22 is perpendicular with the main keel 21 and the false keel 23 and symmetrically about the axis.

In this embodiment, the bearing component of the skeleton 2 (namely the frame body of the present invention) comprise the main keel 21, the frame 22 and the false keel 23 etc, these components are all in the form of arcs or wavy curves along their trend, and other reinforcing components such as the reinforcing rib and the reinforcing plate can also adopt arc-shape structures or wavy curve-shape structures as needed.

To ensure the elastic performance of the skeleton 2 of the ship body and avoid some parts on the ship body limiting the deformation performance of the skeleton 2, other components of the ship body connected with the skeleton 2 are properly improved, especially the hull 1 and the deck 3. The hull 1 is transformed into an arc-shape or an elliptic arc-shape to overcome the problem of stress concentration, and the ship body is not easily to be damaged and cracked. The deck 3 is transformed into a double-layer structure deck comprising an upper deck 32 and a lower deck 31, the lower deck 31 is an arc face turtle structure and is connected on the hull 1 and the skeleton 2, and the lower deck 31 forms an integral ellipsoid-like ship body structure together with the hull 1 and the skeleton 2, and the upper deck 32 is a conventional plane deck and covers on the lower deck 31 with support of the elastic damping slipping structure 4. The elastic damping slipping structure 4 is a spring or a damper or a rubber and plastic or a high polymer material elastic cushion block etc. The upper deck 31 and the lower deck 31 are relatively slidable by means of the elastic damping slipping structure 4.

The elastic material is made from one or more of the following material: spring steel, elastic stainless steel, titanium alloy, alloy steel foamed metal, honeycomb metal, carbon fiber, aramid fiber, basalt fiber, PBO fiber, quartz fiber, Kevlar fiber, caprone fiber, ultra high molecular weight polyethylene fiber, graphite fiber, silicon carbide fiber, boron fiber, modified nature rubber, butyl rubber, nitrile rubber buna (NBR), chloroprene rubber, silicone rubber, polyurethane (PU), polycarbonate (PC), polyamide (PA), polyacetal (Polyoxy Methylene, POM), modified polyphenyl ether (denatured PPE), polyester (PETP, PBTP), polyphenylene sulfide (PPS), polyaryl ether, unsaturated polyester, phenol plastic, epoxy plastic, fluoride plastic, silicon melt compound, polyamideimide (PAI), polyimide, polybismaleimide, polysulfone (PSF), polyether sulfones (PES), propylene plastic, modified melamine plastic, poly(ether-ether-ketone) (PEEK), Polyetherimide (PEI) and liquid crystal plastic.

In this embodiment, the elastic structure anti-impact frame body for ships is made into a wholly elastic frame body by the elastic material, the bearing component constituting the frame body (namely the skeleton 2) are in the form of an arc or a wavy curve, which greatly increases the elastic deformation within security allowable range, and considers the bearing capacity of ships. Besides, the structure of double-layer deck 3 is adopted, the lower deck 31 is arc face turtle structure and is connected on the hull 1 and the skeleton 2, when ship's nose and stern or both sides are under impact, the skeleton 2, the hull 1 and the lower deck 31 of the whole ship body occur corresponding elastic deformation, however, the elastic deformation not affects normal running of ships. The upper deck 32 is a conventional deck and covers on the lower deck 31 with support of the elastic damping slipping structure 4. The upper deck 31 and the lower deck 31 are relatively slidable, and the elastic damping slipping structure 4 plays a role of cushioning and absorbing the impact energy, when the lower deck 31 is deformed, the upper deck 32 is not deformed, so that the superstructure and other facilities of the ship body is stable and comfortable with conventional ship body, which greatly increases the security factor.

Preferably, in consideration of anti-collision performance of the bottom of the ship body, the bottom of the ship body is also transformed into double-layer structure, that is, the elastic protective layer structure 5 is added on the bottom. The structure of the elastic protective layer structure 5 is designed according to the frame body of the whole ship body, that is, the internal skeleton 52, the reinforcing rib, the reinforcing plate and other reinforcing components of the elastic protective layer structure 5 are all in the form of an arc or a wavy curve along the trend, and the arc-shaped shell 51 of the elastic protective layer structure 5 is also in the form of an arc, which is the same with the hull, and the arc-shaped shell 51 and the hull 1 are tangent connection by smooth transition. Both the internal frame 52 and the arc-shaped shell 51 are made of elastic materials. When the bottom of ships strikes on a rock, the elastic protective layer structure 5 of the bottom of the ship body produces moderate elastic deformation, thereby cushioning and absorbing most of impact energies, so that the bottom of the ship body not cracks and the sailing security of ships is guaranteed. The bottom design of the ship body in this embodiment is called as locally elastic anti-impact frame body structure design.

### Embodiment 2:

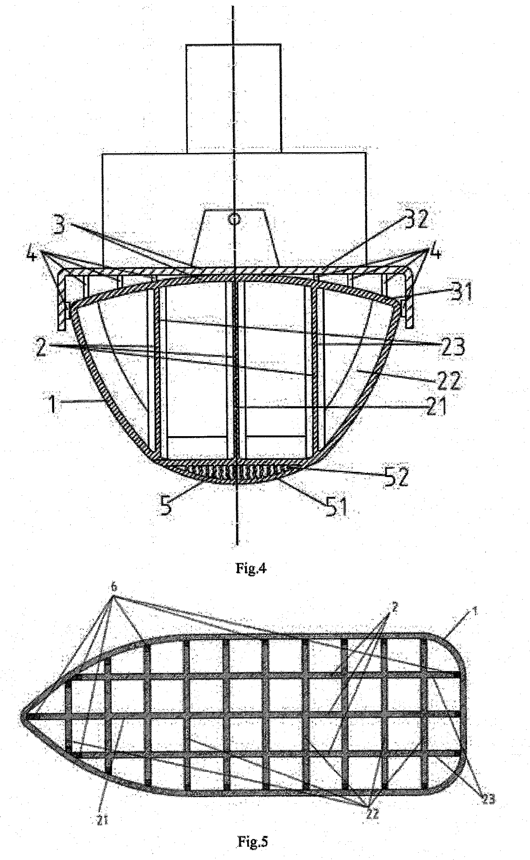

As shown in Fig.5, this embodiment discloses an application of another elastic structure anti-impact frame body in ships. As with the elastic structure anti-impact frame body for ships in embodiment 1, the ship body of the elastic structure anti-impact frame body in this embodiment is made up of a hull 1, a skeleton 2, a deck 3 and other components, and the frame body of the present invention is a wholly elastic frame, that is, the skeleton 2 in the present embodiment. And the bearing component constituting the frame body comprises the intertwined and fixed main keel 21, the frame 22, the false keel 23, the structural reinforcing rib, the reinforcing plate (not shown in the figure) and other reinforcing components. The main keel 21, frame 22 and false keel 23 of the skeleton 2 are all plate-type structures, and are fixedly connected to the internal surface of the hull 1.

The differences with the elastic structure anti-impact frame body for ships of embodiment 1 are the bearing component constituting the skeleton 2 in this embodiment comprising the main keel 21, the frame 22, the false keel 23 and other structures are in the form of a flat and straight shape, but not in the form of an arc or a wavy curve, and ends of each main keel 21, frame 22 and false keel 23 are fixedly connected to the internal surface of the hull 1 by the elastic member 6. Ends of the main keel 21, frame 22 and false keel 23 are all provided with elastic member 6, the elastic member 6 has definite elastic deformation ability, so that the skeleton 2 has equivalent deformation performance, when the ships are under impact, the effect is similar to the skeleton 2 in the form of an arc or a wavy curve in embodiment 1, and this embodiment also belongs to technical scheme of increasing elastic deformation. The elastic member can be metal spring, damper, or modified high polymer material such as polyurethane and micro-foaming polyethylene.

Other technologies in this embodiment comprising materials and the improvement of the hull 1 and the deck 3 and the advantages are the same with embodiment 1, so it's not repeated herein.

### Embodiment 3:

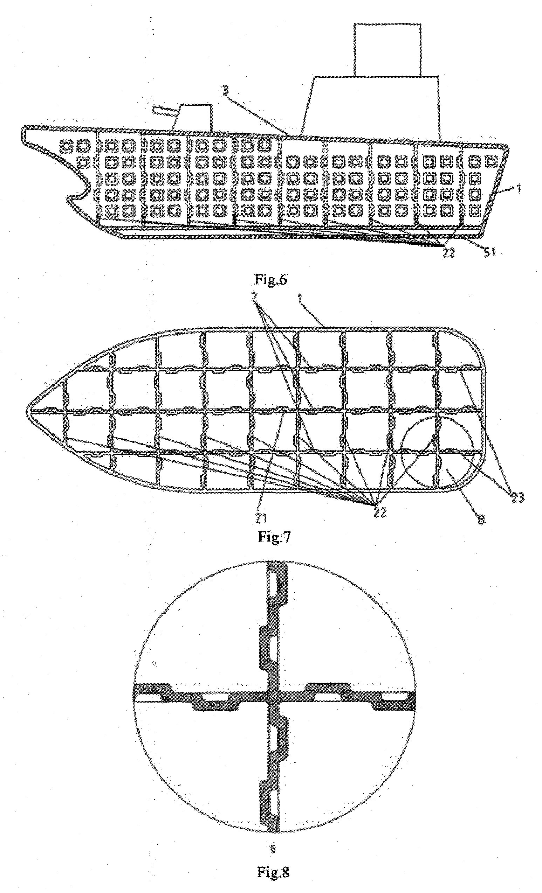

As shown in Fig.6∼8, this embodiment discloses an application of another elastic structure anti-impact frame body in ships. As with the elastic structure anti-impact frame body for ships in embodiment 1, the ship body of the elastic structure anti-impact frame body in this embodiment is a wholly elastic frame, which is made up of a hull 1, a skeleton 2, a deck 3 and other components, and the frame body of the present invention is the skeleton 2 in the present embodiment. And the bearing component constituting the frame body comprises the intertwined and fixed main keel 21, the frame 22, the false keel 23, the structural reinforcing rib, the reinforcing plate (not shown in the figure) and other reinforcing components. The main keel 21, frame 22 and false keel 23 of the skeleton 2 are all plate-type structures, and are fixedly connected to the internal surface of the hull 1, and the whole elastic anti-impact frame body structure is also formed.

The differences with the elastic structure anti-impact frame body for ships are the bearing component of the skeleton 2 of the elastic structure anti-impact frame body for ships in this embodiment comprises the main keel 21, frame 22 and false keel 23 and the bearing component comprises a plurality of grooves and protrusions dislocating and reversely protruding with each other., but not in the form of an arc or a wavy curve in embodiment 1. The upper and lower surfaces of the bearing component comprising a plurality of grooves and protrusions dislocating and reversely protruding with each other can produce certain expansion deformation regardless of the direction of the impact force, compared with common plates, it has superior deformation and restoration ability. The upper and lower surfaces of the main keel 21, frame 22 and false keel 23 comprises a plurality of grooves and protrusions dislocating and reversely protruding with each other, so that the skeleton 2 (namely the frame body of the present invention) has equivalent deformation performance, when the ships are under impact, the effect is similar to the skeleton 2 in the form of an arc or a wavy curve in embodiment 1, and this embodiment also belongs to technical scheme of increasing elastic deformation.

Other technologies in this embodiment comprising the improvement of the hull 1, and the advantages are the same with embodiment 1, so it's not repeated herein.

### Embodiment 4:

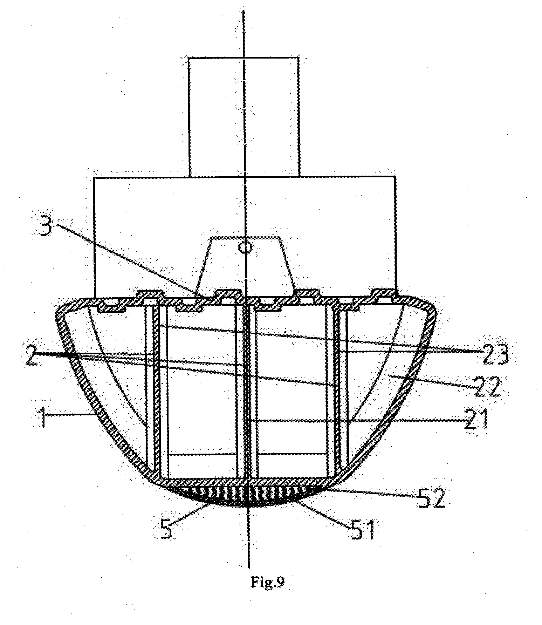

As shown in Fig. 9, this embodiment discloses an application of another elastic structure anti-impact frame body in ships. As with the elastic structure anti-impact frame body for ships in embodiment 1 is made up of a hull 1, a skeleton 2, a deck 3 and other components, and the frame body of the present invention is the skeleton 2 in the present embodiment and is a wholly elastic frame. The frame 2, the hull 1 and the deck 3 are all made of elastic materials. And the bearing component constituting the frame body comprises an intertwined and fixed main keel 21, the frame 22, the false keel 23, the structural reinforcing rib, the reinforcing plate and other reinforcing components. The main keel 21, frame 22 and false keel 23 of the skeleton 2 are all plate-type structures, and are fixedly connected to the internal surface of the hull 1, and the whole elastic anti-impact frame body structure is also formed.

The differences with the elastic structure anti-impact frame body for ships in embodiment 1 are upper and lower surfaces of the deck 3 comprising a plurality of grooves and protrusions dislocating and reversely protruding with each other of the elastic structure anti-impact frame body for ships in this embodiment is a single-layer plane deck. The upper and lower surfaces of the plane deck 3 comprising a plurality of grooves and protrusions dislocating and reversely protruding with each other. has multidirectional elastic and flexible performance, the deck 3 will produce elastic deformation under impact, and has certain cushion and anti-impact ability.

### Embodiment 5:

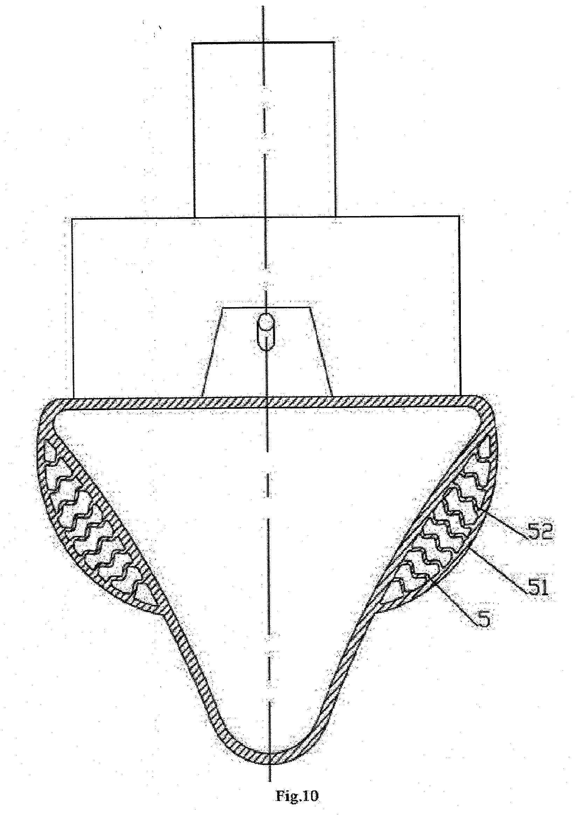

As shown in Fig. 10, this embodiment discloses an application of another elastic structure anti-impact frame body in ships. The difference with the structure of the elastic structure anti-impact frame body for ships in embodiment 1 is that a layer of elastic protective layer structure 5 is added in other easily collision places (such as two sides of the hull for the ship body) of the ship body in this embodiment, the elastic protective layer structure 5 comprises the arc-shaped shell 51, internal skeleton 52, reinforcing rib and reinforcing plate, and the structure made up of the internal skeleton 52, the reinforcing rib and the reinforcing plate is seen as locally elastic structure anti-impact frame body of the present invention, based on the concept of the present invention, bearing component constituting the frame body comprises the internal frame 52, the reinforcing rib and the reinforcing plate, and these components are all made into arc form or wavy curve form along the trend, and the bearing component is machining shaped by spring steel or elastic stainless steel. The arc-shaped shell 51 of the elastic protective layer structure 5 is in the form of an arc, and is tangent connection by smooth transition with original shell of the ship body, which reduces stress concentration and increases the impact strength of bearing external force. The elastic protective layer structure 5 is added in easily collision places of the elastic structure anti-impact frame body for ships in this embodiment, when the ships are under impact, the elastic protective layer structure 5 of easily collision places occurs elastic deformation to absorb and cushion the impact energy, so that the impact energy transferred to the hull, internal bearing component and ship body is greatly weakened, which increases anti-impact performance of ships and increases the security factor. Similarly, it is called as locally anti-impact frame body structure design.

### Embodiment 6:

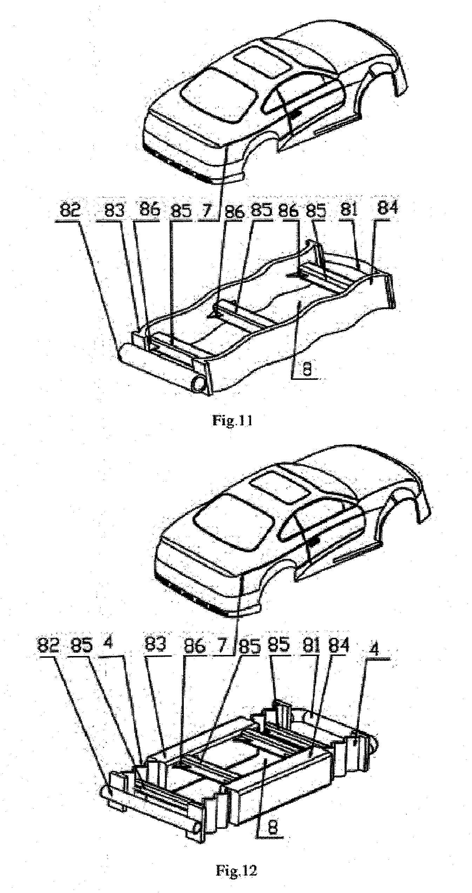

As shown in Fig.11, this embodiment discloses an elastic structure anti-impact frame body applied to automobiles. Automotive body comprises the car body 7 and the car frame structure 8 under the car body 7, the car frame structure 8 is designed as the elastic frame body bearing structure, which can greatly increases the anti-impact performance of automobiles.

The details are as follows:
The car frame structure 8 comprises a front anti-collision beam 81, a back anti-collision beam 82, a left longitudinal beam 83, a right longitudinal beam 84, an automobile beam 85 and reinforcing rib 86, and each component is connected with each other to form stable car frame structure 8. The frame body of the present invention is the car frame structure 8 in this embodiment, the whole frame body is an elastic frame, and the bearing component constituting the frame body comprises the front anti-collision beam 81, the back anti-collision beam 82, the left longitudinal beam 83, the right longitudinal beam 84, the automobile beam 85 and the reinforcing rib 86 etc., these bearing components are all in the form of an arc or a wavy curve, so that the car frame structure 8 has stronger elasticity. The whole frame body (namely the car frame structure of this embodiment) is made of the elastic material.

The elastic material is made from one or more of the following material: spring steel, elastic stainless steel, titanium alloy, alloy steel foamed metal, honeycomb metal, carbon fiber, aramid fiber, basalt fiber, PBO fiber, quartz fiber, Kevlar fiber, caprone fiber, ultra high molecular weight polyethylene fiber, graphite fiber, silicon carbide fiber, boron fiber, modified nature rubber, butyl rubber, nitrile rubber buna (NBR), chloroprene rubber, silicone rubber, polyurethane (PU), polycarbonate (PC), polyamide (PA), polyacetal (Polyoxy Methylene, POM), modified polyphenyl ether (denatured PPE), polyester (PETP, PBTP), polyphenylene sulfide (PPS), polyaryl ether, unsaturated polyester, phenol plastic, epoxy plastic, fluoride plastic, silicon melt compound, polyamideimide (PAI), polyimide, polybismaleimide, polysulfone (PSF), polyether sulfones (PES), propylene plastic, modified melamine plastic, poly(ether-ether-ketone) (PEEK), Polyetherimide (PEI) and liquid crystal plastic.

This embodiment is to cushion, disperse and transfer the impact force by utilizing specially designed car frame structure 8, thereby reducing the impact force transferred to the driving room and achieving the purpose of protecting personnel inside the automobiles. The most important thing is to protect security of personnel inside the automobiles in car crash, so it is better to ensure smaller deformation of driving room, and it is considered for design of existing automobiles, during car crash, a part of mechanism is collapsed firstly to absorb the impact energy, thereby reducing the impact force transferred to the driving room. The structure is in front and end of automobiles, the anti-impact of car body side mainly depends on strength of anti-impact beam of car door or lateral security air bag. In this embodiment of the present invention, the elastic structure anti-impact frame body has stronger elastic deformation performance, and also cushions and absorbs the impact energy by deformation of car body, however, it is different with collapsing mechanism of existing automobiles. The anti-impact collapsing mechanism of automobiles is an irreversible deformation, after the automobile is under impact, unrecoverable plastic deformation of the car body is occurred, in fact, collapsing structure is a measure to sacrifice the car body to obtain personal security. However, the elastic structure anti-impact frame body applied to automobiles of the present invention also has deformation performance, however, it is a reversible deformation. When automobiles are under impact from the front and the back, the front anti-impact beam 81 or the back anti-impact beam 82 occurs deformation firstly to cushion and absorb partial energy, and transfer the impact force to the left longitudinal beam 83 and right longitudinal beam 84, so that the left longitudinal beam 83 and right longitudinal beam 84 occur deformation to further cushion the energy, and greatly reduce the impact force transferred to the driving room. Safe flexible space during impact is fully considered in automobile design, so that car body returns to original shape when releasing energy. When the impact force is lost, deformed left longitudinal beam 83 and right longitudinal beam 84 return to original shape under elastic restoring force, not affecting appearance and use, and heavy maintenance is not needed after collision.

In this embodiment, parts of component structure of the whole frame body (only crossbeam or longitudinal beam) are made into arc-shapes or curvy wave-shapes by the elastic material, so that only cross direction or longitudinal direction has preferred elastic performance, and anti-impact ability is increased at specified direction, which forms an integral elastic frame body structure.

### Embodiment 7:

As shown in Fig. 12, this embodiment also discloses an elastic structure anti-impact frame body applied to automobiles. As described in embodiment 6, automotive body comprises a car body 7 and a car frame structure 8 under the car body 7, and the anti-impact ability of automobiles mainly depends on the car frame structure 8. The car frame structure 8 is the frame body of this embodiment, and it is designed with preferred elastic performance, which can greatly increase anti-impact performance of automobiles.

The differences with embodiment 6 are as follows:
The bearing component constituting the car frame structure 8 (the frame body of the present invention) comprises the front anti-collision beam 81, the back anti-collision beam 82, the left longitudinal beam 83, the right longitudinal beam 84, the automobile beam 85 and the reinforcing rib 86 etc., however, these components are in the form of a flat and straight shape of existing conventional design, but not in the form of an arc or a wavy curve, and the difference with existing design is the left longitudinal beam 83 and the right longitudinal beam 84 are conventional straight-shape, however, the ends can be connected with the front anti-collision beam 81 and the back anti-collision beam 82 by elastic members 8, so that local left longitudinal beam 83 and right longitudinal beam 84 have stronger elastic performance. When automobiles are under impact force front and back, larger elastic deformation can be produced and energy can be absorbed more effectively.

The effect of this embodiment is the same with embodiment 6, and it is not repeated herein. Besides, embodiment 6 and embodiment 7 can be applied to design for the same automobile, so that the whole and local elastic anti-impact frame body structure can be combined effectively.

### Embodiment 8:

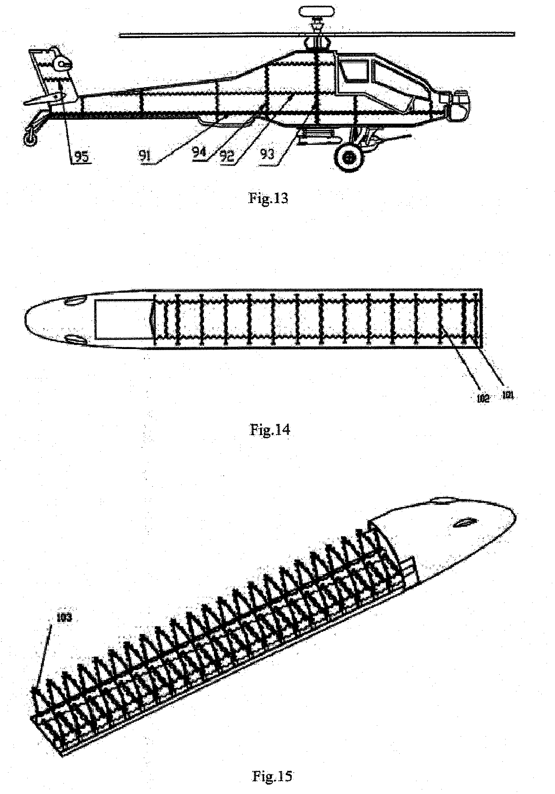

This embodiment discloses an application of an elastic structure anti-impact frame body in aircrafts. In this embodiment, the helicopter is taken as an example, and it is also applicable to other aircrafts comprising airplane, airship and fire ballon manned frame etc. The helicopter is seen as a structural frame and other components, including skin, radar, rotor, landing gear, empennage, power devices and weapon devices etc. The helicopter is seen as being made up of a structural frame and other components, and Fig. 13 shows only the structural frame of the helicopter. As shown in Fig.13, the frame body for helicopters is made up of a main beam 91, a secondary beam 92, a main frame 93, a side frame 94 and a reinforcing rib 95. Based on the concept of the present invention, the frame body is a whole elastic frame body, bearing component constituting the frame body is in the form of an arc or a wavy curve, and the frame body is made of elastic materials. In this embodiment, after the helicopter is designed based on above-mentioned design, the frame body of the whole helicopter has stronger elastic deformation performance.

The elastic material is made from one or more of the following material: spring steel, elastic stainless steel, titanium alloy, alloy steel foamed metal, honeycomb metal, carbon fiber, aramid fiber, basalt fiber, PBO fiber, quartz fiber, Kevlar fiber, caprone fiber, ultra high molecular weight polyethylene fiber, graphite fiber, silicon carbide fiber, boron fiber, modified nature rubber, butyl rubber, nitrile rubber buna (NBR), chloroprene rubber, silicone rubber, polyurethane (PU), polycarbonate (PC), polyamide (PA), polyacetal (Polyoxy Methylene, POM), modified polyphenyl ether (denatured PPE), polyester (PETP, PBTP), polyphenylene sulfide (PPS), polyaryl ether, unsaturated polyester, phenol plastic, epoxy plastic, fluoride plastic, silicon melt compound, polyamideimide (PAI), polyimide, polybismaleimide, polysulfone (PSF), polyether sulfones (PES), propylene plastic, modified melamine plastic, poly(ether-ether-ketone) (PEEK), Polyetherimide (PEI) and liquid crystal plastic.

Crash accidents of helicopters, airships and fire ballons occur occasionally, and emergency landing on water or land of airplanes also occurs frequently, the helicopter in this embodiment is designed as an elastic structure anti-impact frame body, so that the helicopter has larger elastic deformation range, when the helicopter is under impact or the airplane makes a forced landing on water or land, the impact energy can be cushioned and absorbed effectively, which greatly increases security factor.

### Embodiment 9:

As shown in Fig.14 and Fig.15, this embodiment discloses an elastic structure anti-impact frame body applied to railway trains, including trains, motor cars, high-speed railways and subway trains. Railway trains are made up of lead cars on both ends and several sections of middle car bodies, and this embodiment takes a section of lead car of motor train set as an example to further explain the application of the present invention in railway trains.

Head car bodies of the motor train set is mainly made up of a driving room, a underframe, a car roof, a left and right side wall and an end wall etc., the car body frame comprises a boundary beam 101 of the underframe, a crossbeam of the underframe, and a ring beam 103 through the left and right side wall and the car roof, and the boundary beam 101 is parallel with driving direction of motor cars and the crossbeam 102 is perpendicular to the boundary beam 101. In this embodiment, the car body frame is the frame body of the present invention, and bearing components constituting the frame body is the boundary beam 101, the crossbeam 102 and the ring beam 103 etc of the car frame body, and these components are designed as arc-shape or curvy wave-shape along the trend. Other parts associated with the car body frame eliminate unfavorable deformation elements as much as possible to ensure the frame body structure has better elastic deformation ability. And in consideration of elastic performance, the frame body is made of elastic materials, and the elastic materials are the same with embodiment 1.

As above embodiments, when the lead car of the motor car is under impact, the car body frame of the lead car will generate elastic deformation to cushion and absorb the impact energy. Only a section of lead car of the motor car is analyzed, and the anti-impact effect cannot be ignored. Similarly, other middle car bodies for the motor car (or other railway trains) are also improved, and the whole motor car (or other railways) can have better anti-impact performance, which greatly increases security of motor car and personnel in the motor car.

Some automobiles (including cars, buses and covered cars etc) also have ring beam structure similar to above mentioned motor cars for supporting upper cover of the car body. In the elastic structure anti-impact frame body for automobiles of embodiment 6 and embodiment 7, if the automobile also comprises a ring beam, the ring beam should be designed as arc-shape or curvy wave-shape, as the ring beam 103 in embodiment 9, and the effect is described as above mentioned, that is, security performance of the whole automobile can be increased.

Above disclosure merely shows several preferred embodiments of the invention, and the invention is not limited thereto. Any variations or substitution that may come into the mind of those skilled in the art shall fall into the protection scope of the invention. Therefore, the protection scope of the invention shall be limited by the claims.

## Claims

1. An elastic structure anti-impact frame body, **characterized in that** the frame body is a wholly or partially elastic frame, and a bearing component constituting the frame body is in the form of an arc or a wavy curve; and the frame body is made of an elastic material.

2. The elastic structure anti-impact frame body according to claim 1, **characterized in that** the elastic material is made from one or more of the following material: spring steel, elastic stainless steel, titanium alloy, alloy steel foamed metal, honeycomb metal, carbon fiber, aramid fiber, basalt fiber, PBO fiber, quartz fiber, Kevlar fiber, Caprone fiber, ultra high molecular weight polyethylene fiber, graphite fiber, silicon carbide fiber, boron fiber, modified nature rubber, butyl rubber, nitrile rubber buna (NBR), chloroprene rubber, silicone rubber, polyurethane (PU), polycarbonate (PC), polyamide (PA), polyacetal (Polyoxy Methylene, POM), modified polyphenyl ether (denatured PPE), polyester (PETP, PBTP), polyphenylene sulfide (PPS), polyaryl ether, unsaturated polyester, phenol plastic, epoxy plastic, fluoride plastic, silicon melt compound, polyamideimide (PAI), polyimide, polybismaleimide, polysulfone (PSF), polyether sulfones (PES), propylene plastic, modified melamine plastic, poly(ether-ether-ketone) (PEEK), Polyetherimide (PEI) and liquid crystal plastic.

3. The elastic structure anti-impact frame body according to claim 1, **characterized in that** the frame body is applied to moving carriers, comprising ships, automobiles, aircrafts, railway trains and railway cars.

4. The elastic structure anti-impact frame body according to claim 1, **characterized in that** the bearing component is in the form of an arc or a wavy curve; or the bearing component is in the form of a flat and straight shape, and an end of the bearing component is fixedly connected to an adjacent component structure by an elastic member; or
an upper and lower surfaces of the bearing component comprises a plurality of grooves and protrusions dislocating and reversely protruding with each other.

5. The elastic structure anti-impact frame body according to claim 1 or claim 4, **characterized in that** the bearing component comprises a main keel, a false keel and a frame of ships.

6. The elastic structure anti-impact frame body according to claim 1 or claim 4, **characterized in that** the bearing component comprises a front anti-collision beam, a back anti-collision beam, a left longitudinal beam, a right longitudinal beam and a crossbeam of automobiles.

7. The elastic structure anti-impact frame body according to claim 1 or claim 4, **characterized in that** the bearing component comprises a main beam, a secondary beam, a main frame, a side frame of aircrafts.

8. The elastic structure anti-impact frame body according to claim 1 or claim 4, **characterized in that** the bearing component comprises a boundary beam, a crossbeam and a ring beam of railway trains and railway cars.
